# EUROPEAN PATENT SPECIFICATION

(11) **EP 2 577 370 B1**
(45) Date of publication and mention of the grant of the patent: **26.11.2014**
(21) Application number: 10721497.5
(22) Date of filing: 25.05.2010
(51) Int. Cl.: G02B 6/245, G02B 6/44

(54) **STRIPPING TOOL FOR OPTICAL CABLE**
ABISOLIERWERKZEUG FÜR EIN OPTISCHES KABEL
OUTIL À DÉNUDER POUR CÂBLE OPTIQUE

(43) Date of publication of application: 10.04.2013
(73) Proprietor: Prysmian S.p.A., 20126 Milano (IT)
(72) Inventor: ABBIATI, Fabio, I-20126 Milano (IT); GRIFFITHS, Ian James, I-20126 Milano (IT); LE DISSEZ, Arnaud, I-20126 Milano (IT)
(74) Representative: Colombo, Stefano Paolo
(86) International application number: PCT/EP2010/057169
(87) International publication number: WO 2011/147440

(56) References cited:
- EP-A1- 0 682 273
- EP-A1- 1 089 409
- WO-A1-2009/087007
- WO-A1-2010/054694
- US-A1- 2007 286 564
- US-B1- 6 643 448

## Description

### Technical field

The present invention relates to the field of installation of optical fiber networks. In particular, the present invention relates to a stripping tool suitable for making an access window in an optical cable.

### Background art

Installation of an optical fiber network (such as for instance a Fiber-to-the-Home network) typically requires laying down optical cables and making connections between the optical fibers housed in the optical cables.

An optical cable typically comprises an external tubular sheath (or, briefly, "sheath") and a number of optical fibers arranged within the sheath. For making connections between optical fibers housed in optical cables, an access window should be cut in the sheath of the optical cables, so that the optical fibers to be connected may be accessed and extracted from the respective optical cables through the access windows.

For cutting an access window in the sheath of optical cables, a stripping tool is typically used, i.e. a tool configured to remove a portion of the sheath of an optical cable without cutting any optical fibers housed within the sheath.

US 2007/0286564 discloses a tool and method for accessing fibers within an in-line optical fiber cable. The tool can be used to access optical fibers within buffer tubes held in distribution cables. In one embodiment, the tool is clamped over a buffer tube and a blade is slid across a blade guide of the tool to facilitate the cutting of a fiber access window in the buffer tube. The method of accessing fibers within a fiber optic cable includes supporting a section of buffer tube and sliding a blade across the mid-portion of the supported section thereby creating optical fiber access windows therein.

WO 2009/087007 discloses a tool for accessing optical fibers contained in a cable, said tool comprising a body with a longitudinal recess for partially housing a portion of said cable, and a blade transversely secured in said recess with a predetermined slant with respect to the longitudinal axis of said recess. The tool is positioned over the optical cable to house the cable into the longitudinal recess. Exerting a controlled pressure on the cable, the tool is tracked along the cable in the cutting direction parallel to the cable axis.

WO2010/054694, discloses a tool for cutting an access window on an optical cable, wherein the optical cable comprises a sheath. The tool comprises a first arm and a second arm. The first and second arms are hinged at a pivot axis so that, for each of the first and second arms, an handle and a jaw, respectively, is provided. The tool further comprises a first jaw head and a second jaw head which are connected to the jaws of the first and second arms. The tool further comprises a first cutting device rigidly connected to the first jaw head and a second cutting device rigidly connected to the second jaw head for cutting a window in the sheath of the cable when the handles are rotated to a closing configuration.

### Summary of the invention

The Applicant has noticed that the above known tools and methods have some drawbacks.

As to the tool of US 2007/0286564, in order to cut a window a separate blade has to be provided. The tool, in fact, only provides a blade guide to facilitate the cutting of a fiber access window into a buffer tube. As the cutting of the sheath is made by the operator by a separate blade, it is possible that the sheath removal is made through more than one cut. This results in a corresponding number of small chips which may either remain in the cable or are sometimes left on the site where the stripping operation is carried out. This has negative effect on the environment. Moreover, disadvantageously, the operator may accidentally injure himself with the blade while he cuts the access window.

As to the tool of WO 2009/087007, it may not always provide an accurate access window. The depth and the size of the cut indeed depend on the pressure exerted by the operator, which can be either excessive or insufficient. Furthermore the cable has to be fixed or held steady during the cutting because of the axial traction force applied thereupon for opening the access window would cause the cable to move thus making the cutting difficult if not impossible. Further, the blade is disadvantageously exposed, and accordingly the operator may accidentally injure himself with the blade while he cuts the access window.

As to the tool of WO2010/054694, also in this case the blade is disadvantageously exposed, and accordingly the operator may accidentally injure himself with the blade while he cuts the access window. Further, the operation of removing the optical cable portion with the cut access window from the jaws of the tool is dangerous, since the optical cable portion may remain wedged between the arms of the tool.

The Applicant faced the problem of providing a stripping tool for making an access window in an optical cable (thereby allowing access to optical fibers contained within the optical cable) which overcomes at least one of the aforesaid drawbacks.

In particular, the Applicant has faced the problem of providing a stripping tool for making an access window in an optical cable whereby the risk of injuries during stripping is minimized and the reproducibility of the cut access windows is maximized.

For the purpose of the present description and of the appended claims, the expression "optical cable" will indicate any tubular arrangement comprising a sheath that contains, directly or indirectly, optical fibers. As an example, such optical cable may comprise a sheath and a number of optical fibers loosely arranged within the sheath. As a further example, such optical cable may comprise a sheath and a number of optical modules (e.g. micromodules) housed therein, each module comprising a retaining element enclosing a number of optical fibers.

According to the present invention, the Applicant found that the above problems are solved by a stripping tool comprising a blade block in turn comprising a blade, a casing provided with at least one guiding element, wherein the blade block is movable within the casing, and an actuating device operable from outside the casing, configured to impart to the blade block a movement along a cutting path defined by the guiding element so that a portion of the sheath of the optical cable is cut in a controlled manner.

The risk that the operator injuries himself while he uses the stripping tool of the present invention is minimized, since the blade is always hidden within the casing. For cutting an access window in the sheath of an optical cable, the operator simply has to move the blade by operating the actuating device (a lever, according to preferred embodiments) located externally to the casing. This prevents the operator from accidentally entering into contact with the blade. The stripping tool of the present invention is therefore advantageously very safe.

On the other hand, the movement of the blade when operated by the lever is guided in a predefined way by the guiding element of the casing (two guiding slots provided in the sidewalls of the casing, according to preferred embodiments). Therefore reproducibility of the cut access windows is maximized, since the cutting path followed by the blade (and then the shape and depth of the cut access windows) exclusively depends on the shape of the guiding slots, while it is independent of the pressure exerted by the operator on the lever. This avoids that the operator performs a too deep cut in the sheath and accidentally breaks the optical fibers housed therein. On the other hand, this avoids that the operator performs a too superficial cut, i.e. a cut whose depth is lower than the thickness of the sheath.

Therefore, the tool of the present invention allows opening an access window in a single, simple and safe manoeuvre.

According to an aspect thereof, the present invention provides a stripping tool for cutting an access window in an optical cable, wherein the tool comprises:
- a blade block comprising a blade;
- a casing provided with at least one guiding element, wherein the blade block is movable within the casing; and
- an actuating device, operable from outside the casing, configured to impart to the blade block a movement along a cutting path defined by the guiding element so that a portion of the sheath of the optical cable is cut in a controlled manner.

Preferably, the guiding element comprises a guiding slot provided in a sidewall of the casing.

Preferably, the guiding slot has a central portion and two end portions, the central portion being substantially straight and the two end portions being slanted relative to the central straight portion, so that the guiding slot is bent.

Preferably, the casing further comprises an expulsion slot provided in an end closure of the casing for allowing expulsion of the portion of the sheath from the casing.

Preferably, the blade block further comprises at least two guiding pins having at least one projecting end suitable for engaging with the guiding element for guiding the blade block in the casing along the cutting path.

Preferably, the actuating means comprise a lever pivotally fixed to the casing.

Preferably, the lever comprises two arms fitted onto the casing, the two arms being movable along the guiding element when the lever is pivoted relative to the casing.

Preferably, each of the two arms terminates with a fork.

Preferably, the projecting end of the two guiding pins projects outside the casing and engages with the fork for imparting to the blade block a movement along the cutting path.

Preferably, the casing is in the form of a parallelepiped with a partially opened bottom.

Preferably, the blade has a cutting edge facing the opened bottom.

Preferably, the stripping tool further comprises a base having a cable support surface for supporting the optical cable.

Preferably, the base is connected to the casing for blocking the optical cable between the cable support surface and at least one cable stop surface formed by the casing.

Preferably, the base comprises adjusting means for adjusting a reciprocal distance between the base and the casing, for using the stripping tool with optical cables of different diameters.

Preferably, the adjusting means comprise at least one cylinder and at least one nut, the cylinder projecting from the base, passing through the casing and having a threaded end projecting from the casing, the nut having an internally threaded tubular body suitable for receiving the threaded end of the cylinder.

### Brief description of the drawings

The present invention will become fully clear by reading the following detailed description to be read by referring to the accompanying drawings, wherein:
- Figure 1 is an axonometric schematic view of a stripping tool according to one embodiment of the present invention;
- Figure 2 is an enlarged view of a portion of the stripping tool of Figure 1;
- Figure 3 is an axonometric view of the body and blade of the blade block;
- Figures 4a and 4b are front views of the stripping tool adjusted for being used with two optical cables having different external diameters;
- Figures 5a to 5c show three steps of the operation of cutting an access window in the sheath of an optical cable by means of the stripping tool of the present invention; and
- Figure 6 shows an optical cable having an access window resulting from the operation of cutting as shown in Figures 5a to 5c.

### Detailed description of preferred embodiments of the invention

The stripping tool according to embodiments of the present invention is schematically shown in the various Figures.

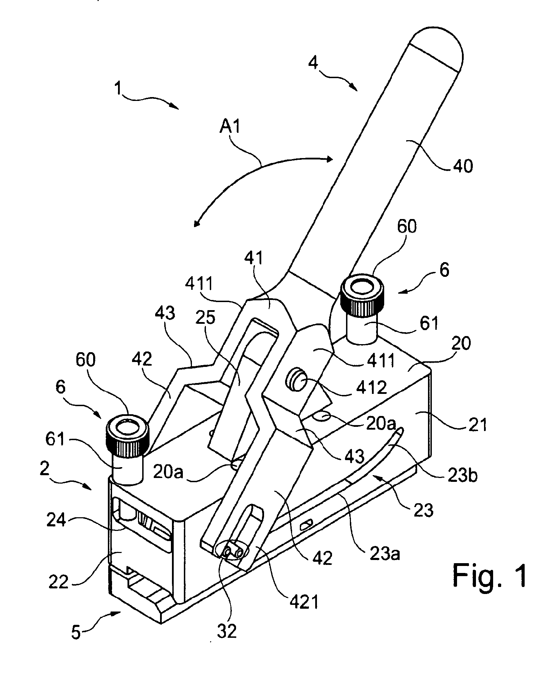

With reference first to Figure 1, the stripping tool 1 comprises a casing 2, a blade block 3, a lever 4 and a base 5. The casing 2, the blade block 3, the lever 4 and the base 5 are preferably made of aluminium.

The casing 2 preferably is in the form of a parallelepiped having a partially opened bottom. In particular, the casing 2 comprises an upper surface 20, two opposite sidewalls 21 and two opposite end closures 22. In Figure 1, only one of the two sidewalls 21 and only one of the two end closures 22 are visible. The direction perpendicular to the two end closures 22 will be termed herein after "longitudinal direction of the casing" or, briefly, "longitudinal direction".

The length of the casing 2 (i.e. its size along the longitudinal direction) is preferably comprised between about 100 mm and about 160 mm, and more preferably is equal to about 130 mm. The height and width of the casing 2 (i.e. its sizes perpendicularly to the longitudinal direction) are preferably comprised between about 25 mm and about 45 mm, and more preferably they are both equal to about 35 mm.

Sidewalls 21 are preferably higher than the end closures 22, so that the lower edges of the sidewalls 21 inferiorly project relative to the lower edges of the end closures 22.

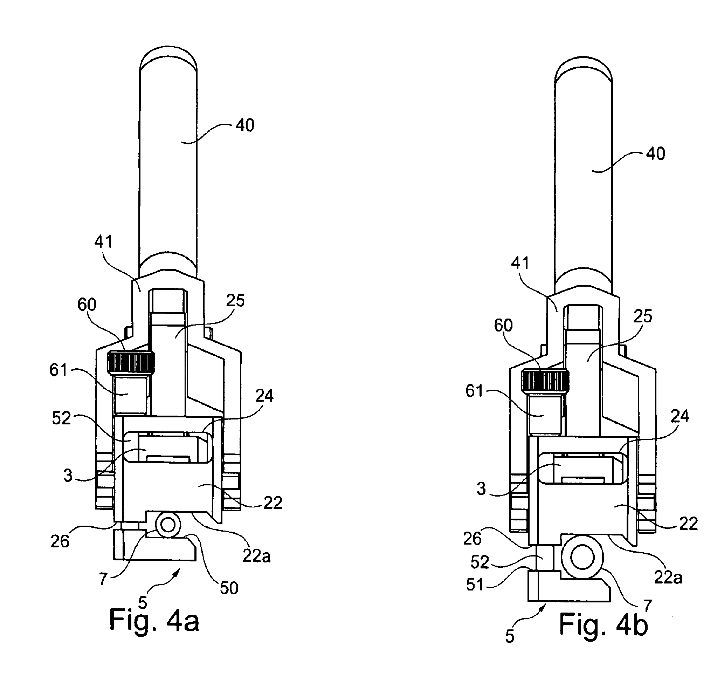

The lower edges of the end closures 22 are preferably bent substantially at right angles toward the interior of the casing 2, so as to form two cable stop surfaces 22a (see Figures 4a and 4b, where one of the two cable stop surfaces 22a is visible).

Also the lower edge of one of the two sidewalls 21 is preferably bent substantially at right angle toward the interior of the casing 2, so as to form a bottom stop surface 26 (see Figures 4a and 4b). Since, as mentioned above, the lower edges of the sidewalls 21 inferiorly project relative to the lower edges of the end closures 22, the bottom stop surface 26 is located at a lower level than the two cable stop surfaces 22a.

The bottom stop surface 26 preferably has a number of first adjusting holes (not visible in the drawings). Besides, the upper surface 20 has a corresponding number of second adjusting holes (not visible in the drawings) substantially vertically aligned with the first adjusting holes of the bottom stop surface 26. More preferably, the bottom stop surface 26 has two first adjusting holes located at its opposite longitudinal ends, and the upper surface 20 has two second adjusting holes vertically aligned with the two first adjusting holes of the bottom stop surface 26. The first and second adjusting holes allow fixing the casing 2 to the base 5 and, at the same time, adjusting the reciprocal distance between of the casing 2 and the base 5, as it will be described in detail herein after.

Each of the two sidewalls 21 preferably has a respective guiding slot 23. Each guiding slot 23 preferably has a central portion 23a and two opposite end portions 23b. In Figure 1, only one of the two end portions 23b is visible, the other one being engaged by the blade block 3, as it will be described in detail herein after. The central portion 23a is preferably straight and is arranged parallel to a longitudinal direction. The end portions 23b are preferably slanted relative to the longitudinal direction of the casing 2, so that each guiding slot 23 is bent, at its ends, towards the upper surface 20 of the casing 2. The length of the central portion 23a is preferably comprised between about 30 mm and about 70 mm, and is more preferably equal to 50 mm. The length of each end portion 23b is preferably comprised between about 15 mm and about 35 mm, and is more preferably equal to 25 mm about.

At least one of the two end closures 22 is preferably provided with an expulsion slot 24. The expulsion slot 24 is preferably straight, and is arranged parallel to the edge formed by the upper surface 20 and the end closure 22 provided with the expulsion slot 24.

The casing 2 further comprises a wedge 25 projecting externally to the casing 2. In particular, the wedge 25 is substantially in the form of a triangle having a base and a rounded vertex. The base is preferably fixed to the upper surface 20 so that the wedge 25 projects externally to the casing 2. The wedge 25 has one or more first lever fixing holes (not visible in the drawings) preferably provided in the proximity of its rounded vertex. Preferably, a single first lever fixing hole passes through the thickness of the wedge 25 in the proximity of its rounded vertex. The first lever fixing hole(s) allows pivotally fixing the lever 4 to the casing 2, as it will be described in further detail herein after.

The upper surface 20 further exhibits a number of holes 20a (preferably four holes) arranged around the wedge 25. Such holes 20a advantageously allow accessing the interior of the casing 2 with a key, as it will be described in detail herein after.

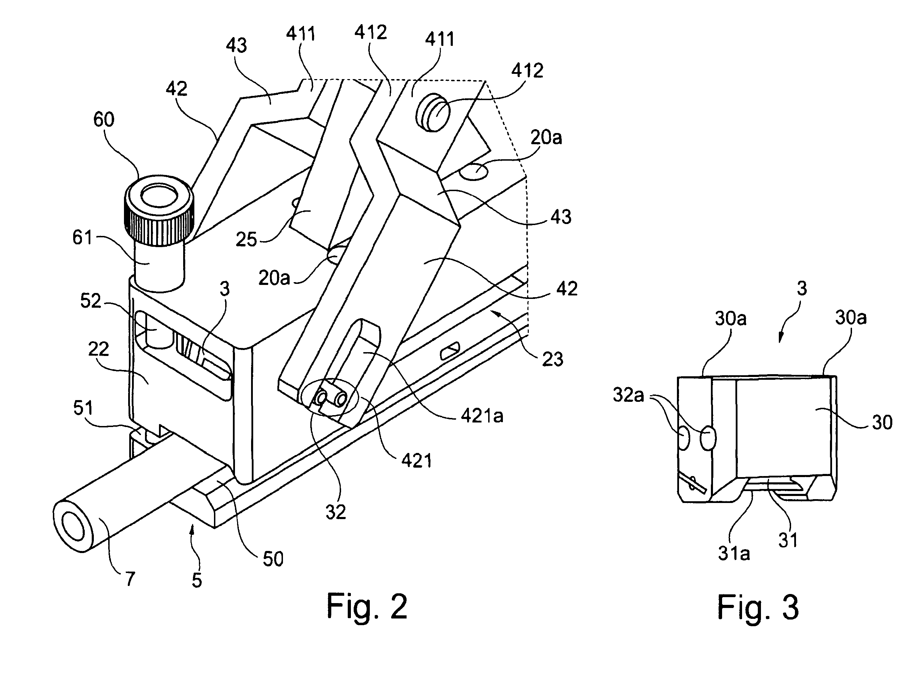

With reference now to Figure 3, the blade block 3 preferably comprises a body 30 and a blade 31. The body 30 has a recess and two parallel through holes 32a that cross the body 30. The blade 31 is preferably flat and has a cutting edge 31 a. The blade 31 is preferably housed in the recess of the body 30. In particular, the blade 31 preferably has its cutting edge 31 a arranged parallel to the through holes 32a and facing away the body 30, and it is preferably tilted relative to the plane defined by the two through holes 32a. The blade 31 is preferably rigidly fixed to the body 30 by means of one or more pegs 30a. The blade block 3 further comprises two guiding pins 32 (see e.g. Figure 2), each guiding pin 32 engaging a respective through hole 32a and having its ends laterally projecting on opposite sides of the body 30. Each guiding pin 32 preferably has a circular cross-section. The diameter of each guiding pin 32 is preferably slightly narrower than the width of the guiding slots 23.

The blade block 3 is preferably housed within the casing 2. In particular, the blade block 3 is arranged within the casing 2 so that the cutting edge 31 a of the blade 31 faces the partially opened bottom of the casing 2, the guiding pins 32 (and therefore also the cutting edge 31 a) are perpendicular to the longitudinal direction of the casing 2, and the projecting ends of the guiding pins 32 engage with the guiding slots 23 and project therethrough on the exterior of the casing 2. This allows moving the blade block 3 (and therefore the blade 31) within the casing 2 along a predefined cutting path defined by the guiding slots 23, as it will be described in further detail herein after.

The pegs 30a fixing the blade 31 to the block 30 may be loosened for replacing the blade 31 by means of a key, whose tip may be inserted in the casing 2 through the holes 20a of the upper surface 2. This allows replacing the blade 31 without extracting the blade block 3 from the casing 2.

The lever 4 preferably comprises a handle 40, a pivot portion 41 and two opposed arms 42.

The pivot portion 41 is connected to the handle 40 and preferably has two facing shoulders 411 arranged so as to form a central recess suitable for housing a portion (in particular, the rounded vertex) of the wedge 25. Each one of the two facing shoulders 411 preferably has a respective second lever fixing hole (not visible in the drawings). The second lever fixing holes are preferably through holes.

Each of the two arms 42 of the lever 4 has a first end preferably connected to a respective one of the shoulders 411 through diverging interconnection elements 43. The two arms 42 are preferably parallel each other. Preferably, the reciprocal distance of the two arms 42 is higher than the reciprocal distance of the shoulders 411 of the pivot portion 41. In particular, the reciprocal distance of the shoulders 411 of the pivot portion 41 is preferably slightly higher than the thickness of the wedge 25, for allowing the rounded vertex of the wedge 25 to be housed in the recess comprised between the shoulders 411. On the other hand, the reciprocal distance of the arms 42 is preferably slightly higher than the width of the end closures 22, for allowing the casing 2 to be housed between the arms 42.

Each of the arms 42 preferably has a free end (opposite to the end fixed to the shoulder 411 through the diverging interconnection elements 43) terminating with an elongated fork 421 defining a further guiding slot 421 a.

The lever 4 is preferably fitted onto the casing 2 having the blade block 3 housed therein as described above, so that:
- the casing 2 is housed between the two arms 42 of the lever 4;
- the ends of the guiding pins 32 projecting on the exterior of the casing 2 through the guiding slots 23 engage with the forks 421 terminating the arms 42 at their free ends; and
- the rounded vertex of the wedge 25 is housed between the shoulders 411 of the pivot portion 41, its first lever fixing hole(s) being aligned with the second lever fixing holes of the shoulders 411.

Then, the pivot portion 41 is pivotally fixed (e.g. by means of one or more pins) to the rounded vertex of the wedge 25. For instance, if the rounded vertex of the wedge 25 comprises a single first fixing hole passing through the whole thickness of the wedge 25, the pivot portion 41 may be fixed to the rounded vertex of the wedge 25 by inserting a single pin 412 through the aligned first and second lever fixing holes. In this way, the lever 4 may be pivotally rotated relative to the casing 2 around the pin 412, by moving its handle 40 as indicated by the arrow A1 of Figure 1.

In particular, when the handle 40 of the lever 4 is moved as indicated by the arrow A1, the arms 42 move along the sidewalls 21 of the casing 2. The engagement between the projecting ends of the guiding pins 32 of the blade block 3 and the forks 421 transmits the motion of the arms 42 to the guiding block 3 which, under the guiding effect due to the engagement between the projecting ends of the guiding pins 32 and the guiding slots 23 of the casing 2, follows a predefined path within the casing 2.

Advantageously, the fact that the two guiding pins 32 are simultaneously guided within the guiding slots 23 (whose width, as mentioned above, is slightly larger than the diameter of a single guiding pin 21) allows the guiding slots 23 to determine also the orientation of the blade body 3 (and then of the blade 31) during its motion along the cutting path.

While the blade block 3 moves along the predefined path, the projecting ends of the guiding pins 32 translate along the further guiding slots 421 a of the forks 421. This guarantees that the engagement between the projecting ends of the guiding pins 32 and the forks 421 is preserved along the whole cutting path.

The base 5 preferably comprises a drawn piece forming a cable support surface 50 and an upper stop surface 51, that longitudinally extend side by side. The upper stop surface 51 is preferably raised relative to the cable support surface 50. The upper stop surface 51 preferably has the same width as the bottom stop surface 26 of the casing 2.

Further, preferably, the base 5 comprises a number of cylinders 52 projecting from the upper stop surface 51 perpendicularly to the upper stop surface 51 itself. Preferably, the number of cylinders 52 is equal to the number of first adjusting holes of the bottom stop surface 26 and to the number of second adjusting holes of the upper surface 20 of the casing 2. Hence, preferably, the base 5 comprises two cylinders 52 located at the opposite longitudinal ends of the upper stop surface 51. Each cylinder 52 preferably has a threaded upper end. The cylinders 52 preferably have an height higher than the height of the sidewalls 21 (namely, the height of the cylinders 52 is preferably higher than the reciprocal distance between the bottom stop surface 26 and the upper surface 20 of the casing 2).

The cylinders 52 projecting from the upper stop surface 51 are preferably inserted into the first adjusting holes of the bottom stop surface 26 and into the second adjusting holes of the upper surface 20, so that their threaded upper ends partially project externally to the casing 2 through the second adjusting holes of the upper surface 20. In this way, the base 5 is connected to the casing 2, and the upper stop surface 52 and the bottom stop surface 26 face each other. The diameter of the first adjusting holes is preferably slightly larger than the external diameter of the cylinders 52. This allows the cylinders 52 sliding into the first adjusting holes.

The tool 1 also comprises a number of nuts 6 equal to the number of cylinders 52. Each nut 6 has a head 60 and an internally threaded tubular body 61. The external surface of the heads 60 is preferably milled for improving gripping on the heads 60 by an operator. Preferably, each nut 6 is fitted onto a corresponding cylinder 52, so that its internally threaded tubular body 61 engages with the threaded upper end of the corresponding cylinder 52 that partially projects outside that casing 2. The nuts 6 are preferably fixed to the upper surface 20 of the casing 2, so that the nuts 6 and the casing 2 are integral along the vertical direction.

By rotating the heads 60 of the nuts 6, the insertion depth of the cylinders 52 into the tubular bodies 61 of the nuts 6 may be adjusted, thereby adjusting the reciprocal distance between the cable support surface 50 and the two cable stop surfaces 22a, as it will be described in further detail herein after.

For preparing the tool 1 for use, the lever 4 is operated so that the blade block 3 is brought into a starting position. In the starting position, the projecting ends of the guiding pins 23 of the blade block 3 preferably engage one of the two end portions 23b of the guiding slots 23, preferably the end portion 23b located next to the end closure 22 provided with the expulsion slot 24.

Then, a length of an optical cable 7 is preferably laid onto the cable support surface 50 of the base 5. Then, the heads 60 of the nuts 6 are rotated so as to move the casing 2 towards the base 5, until the two cable stop surfaces 22a come into contact with the sheath of the optical cable 7. This allows blocking the length of the optical cable 7 between the cable support surface 50 and the two cable stop surfaces 22a, thereby preventing axial movements of the optical cable 7 relative to the tool 1.

The nuts 6 allow adjusting the reciprocal distance of the cable support surface 50 and the two cable stop surfaces 22a so as to block optical cables having different external diameters, as shown in Figures 4a and 4b. The minimum reciprocal distance between the cable support surface 50 and the two cable stop surfaces 22a is achieved when the bottom stop surface 26 of the casing 2 enters into contact with the upper stop surface 51 of the base 5. Hence, the tool 1 is capable of blocking any optical cable whose external diameter is larger than such a minimum reciprocal distance.

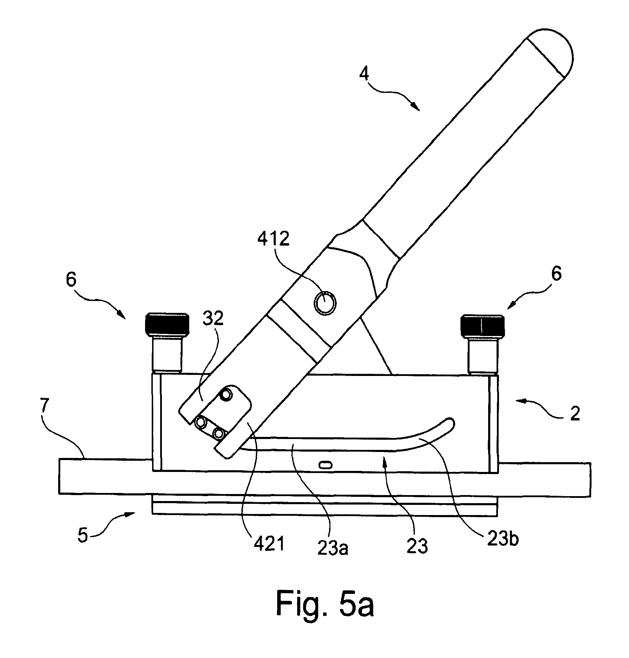

Then, after the optical cable 7 is blocked between the cable support surface 50 and the two cable stop surfaces 22a, the operator may cut an access window into its sheath by operating the lever 4. Figures 5a to 5c show three steps of such an operation.

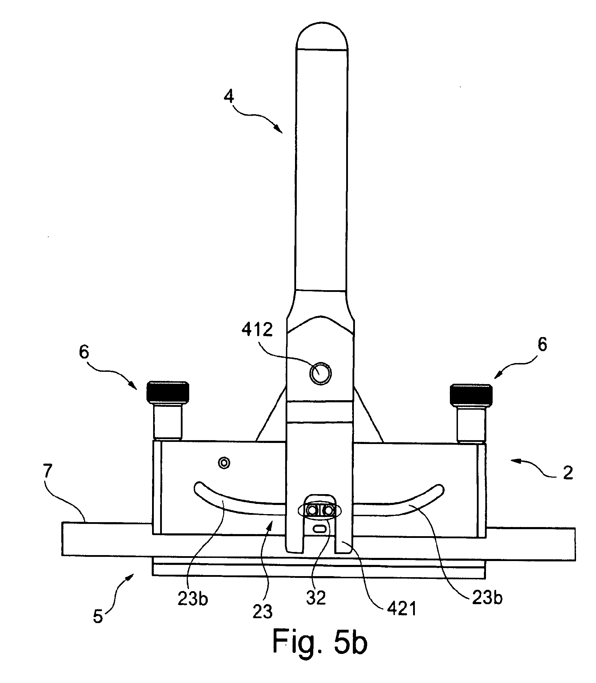

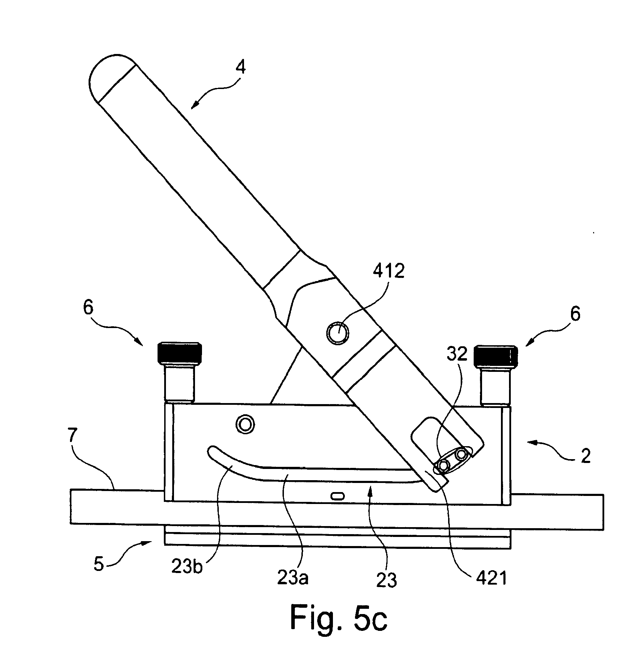

In particular, by operating the lever 4, the blade block 3 is translated from its starting position (Figure 5a) to a final position (Figure 5c), where the projecting ends of the guiding pins 32 of the blade block 3 engage the opposite end portion 23b of the guiding slots 23. During the continuous movement of the blade block 3, the blade 31 cuts a slice of the sheath of the optical cable 7, thereby forming an access window allowing free access to the optical fibers (or to the optical modules) located therein. As described above, the cutting path of the blade block 3 from the starting position to the final position and the orientation of the blade block 3 along the whole cutting path are determined by the engagement between the guiding pins 32 and the guiding slots 23. Figure 5b shows the tool 1 when the blade block 3 is in an intermediate position, where the projecting ends of the guiding pins 32 engage the central portion 23a of the guiding slots 23.

After the blade block 3 has reached its final position, the operator may operate again the lever 4 in the opposite direction, thereby bringing the blade block 3 from the final position back to its starting position. Again, the movement of the blade block 3 is continuously guided by the guiding slots 23. While the blade block 3 moves, its body 30 pushes the cut slice of the sheath towards the exterior of the casing 2 through the expulsion slot 24. When the blade block 3 reaches again its starting position, the cut slice is completely expelled from the casing 2.

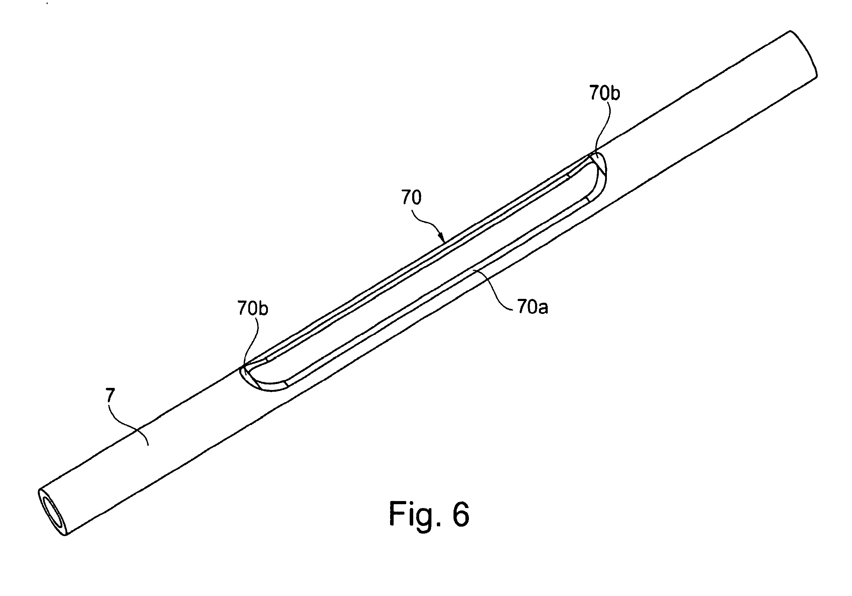

The optical cable 7 may then be removed from the tool 1 by loosening the nuts 6. Figure 6 shows the optical cable 7 with the access window 70 cut in its sheath as a result of the operation described above with reference to Figures 5a to 5c. The shape of the access window 70 correspond to the shape of the guiding slots 23. In particular, the access window 70 comprises a straight central portion 70a corresponding to the straight central portion 23a of the guiding slots 23, and two curved end portions 70b corresponding to the curved end portions 23b of the guiding slots 23. The access window 70 (and, in particular, its straight portion 70a) has uniform depth and width, since the depth and width of the access window 70 depends exclusively on the shape and position of the guiding slots 23.

Advantageously, the tool 1 is particularly safe, since the blade block 3 provided with the blade 31 is always hidden within the casing 2. For cutting the access window 70 in the optical cable 7, the operator simply has to operate the lever 4 that is located externally to the casing 2. The movement of the lever 4 is imparted to the blade block 3 by the engagement between the forks 421 of the lever arms 42 and the projecting ends of the guiding pins 32 of the blade block 3. This prevents the operator from accidentally entering into contact with the blade 31.

On the other hand, the movement of the blade block 3 (and also its orientation) when operated by the lever 4 is guided in a predefined way by the guiding slots 23 of the casing 2. Therefore, reproducibility of the cut access windows is maximized, since the cutting path followed by the blade 31 (and then the shape and depth of the cut access window) exclusively depends on the shape of the guiding slots 23, while it is independent of the pressure exerted by the operator on the lever 4. This avoids that the operator performs a too deep cut in the sheath and accidentally breaks the optical fibers housed therein. On the other hand, this avoids that the operator performs a too superficial cut, i.e. a cut whose depth is lower than the thickness of the sheath.

Further, advantageously, the access window 70 is opened by cutting a single slice cleanly, without producing chips or fragments that could be difficult to remove from the tool 1. The cut slice is expelled from the tool with a simple and safe manoeuvre, without opening the tool 1 and then without the risk of entering into contact with the blade 31.

Further, also the operation of removing the optical cable 7 from the tool 1 is very simple and safe. Indeed, by acting upon the heads 60 of the nuts 6, the casing 2 and the base 5 may be easily pulled away, thereby leaving the optical cable 7 free. There is no risk that the optical cable 7 remains wedged into the tool 1 and that the operator has to perform complicated and dangerous operations for freeing it.

## Claims

1. A stripping tool (1) for cutting an access window (70) in an optical cable (7), wherein the tool (1) comprises:
- a blade block (3) comprising a blade (31);
- a casing (2) provided with at least one guiding element (23), wherein the blade block (3) is movable within the casing (2); and
- an actuating device (4), operable from outside the casing (2), configured to impart to the blade block (3) a movement along a cutting path defined by the guiding element (23) so that a portion of the sheath of the optical cable (7) is cut in a controlled manner, wherein said actuating device comprise a lever (4) pivotally fixed to said casing (2).

2. The stripping tool (1) according to claim 1, wherein the guiding element (23) comprises a guiding slot (23) provided in a sidewall (21) of the casing (2).

3. The stripping tool (1) according to claim 2, wherein the guiding slot (23) has a central portion (23a) and two end portions (23b), the central portion (23a) being substantially straight and the two end portions (23b) being slanted relative to the central straight portion (23a), so that the guiding slot (23) is bent.

4. The stripping tool (1) according to any of the preceding claims, wherein the casing (2) further comprises an expulsion slot (24) provided in an end closure (22) of the casing (2) for allowing expulsion of the portion of the sheath from the casing (2).

5. The stripping tool (1) according to any of the preceding claims, wherein the blade block (3) further comprises at least two guiding pins (32) having at least one projecting end suitable for engaging with the guiding element (23) for guiding the blade block (3) in the casing (2) along the cutting path.

6. The stripping tool (1) according to claim1, wherein the lever (4) comprises two arms (42) fitted onto the casing (2), the two arms (42) being movable along the guiding element (23) when the lever (4) is pivoted relative to the casing (2).

7. The stripping tool (1) according to claim 6, wherein each of the two arms (42) terminates with a fork (421).

8. The stripping tool (1) according to claim 7, wherein the projecting end of the two guiding pins (32) projects outside the casing (2) and engages with the fork (421) for imparting to the blade block (3) a movement along the cutting path.

9. The stripping tool (1) according to any of the preceding claims, wherein the casing (2) is in the form of a parallelepiped with a partially opened bottom.

10. The stripping tool (1) according to claim 9, wherein the blade (31) has a cutting edge (31 a) facing the opened bottom.

11. The stripping tool (1) according to any of the preceding claims, further comprising a base (5) having a cable support surface (50) for supporting the optical cable (7).

12. The stripping tool (1) according to claim 11, wherein the base (5) is connected to the casing (2) for blocking the optical cable (7) between the cable support surface (50) and at least one cable stop surface (22a) formed by the casing (2).

13. The stripping tool (1) according to claim 12, wherein the base (5) comprises adjusting means (54, 6) for adjusting a reciprocal distance between the base (5) and the casing (2), for using the stripping tool (1) with optical cables of different diameters.

14. The stripping tool (1) according to claim 13, wherein the adjusting means (54, 6) comprise at least one cylinder (54) and at least one nut (6), the cylinder (54) projecting from the base (5), passing through the casing (2) and having a threaded end projecting from the casing (2), the nut (6) having an internally threaded tubular body (61) suitable for receiving the threaded end of the cylinder (54).

## Patentansprüche

1. Abisolierwerkzeug (1) zum Schneiden eines Zugriffsfensters (70) in einem optischen Kabel (7), wobei das Werkzeug (1) umfasst:
- einen Klingenblock (3) mit einer Klinge (31),
- ein Gehäuse (2), das mit wenigstens einem Führungselement (23) versehen ist, wobei der Klingenblock (3) in dem Gehäuse (2) bewegt werden kann, und
- eine Betätigungseinrichtung (4), die von außerhalb des Gehäuses (2) betätigt werden kann und konfiguriert ist, um eine Bewegung des Klingenblocks (3) entlang eines durch das Führungselement (23) definierten Schneidepfads zu veranlassen, sodass ein Teil der Hülle des optischen Kabels (7) auf kontrollierte Weise geschnitten wird, wobei die Betätigungseinrichtung einen schwenkbar an dem Gehäuse (2) fixierten Hebel (4) umfasst.

2. Abisolierwerkzeug (1) nach Anspruch 1, wobei das Führungselement (23) ein Führungsschlitz (23) ist, der in einer Seitenwand (21) des Gehäuses (2) vorgesehen ist.

3. Abisolierwerkzeug (1) nach Anspruch 2, wobei der Führungsschlitz (23) einen mittleren Teil (23a) und zwei Endteile (23b) aufweist, wobei der mittlere Teil (23a) im Wesentlichen gerade ist und die zwei Endteile (23b) relativ zu dem mittleren geraden Teil (23a) geneigt sind, sodass der Führungsschlitz (23) gebogen ist.

4. Abisolierwerkzeug (1) nach einem der vorstehenden Ansprüche, wobei das Gehäuse (2) weiterhin einen Auswurfschlitz (24) umfasst, der in einem Endabschlussteil (22) des Gehäuses (2) vorgesehen ist, um ein Auswerfen des Teils der Hülle aus dem Gehäuse (2) zu gestatten.

5. Abisolierwerkzeug (1) nach einem der vorstehenden Ansprüche, wobei der Klingenblock (3) weiterhin wenigstens zwei Führungsstifte (32) umfasst, die wenigstens ein vorstehendes Ende aufweisen, das geeignet ist, um in das Führungselement (23) einzugreifen, um den Klingenblock (3) in dem Gehäuse (2) entlang des Schneidepfads zu führen.

6. Abisolierwerkzeug (1) nach Anspruch 1, wobei der Hebel (4) zwei Arme (42) umfasst, die in das Gehäuse (2) gepasst sind, wobei die zwei Arme (42) entlang des Führungselements (23) bewegt werden können, wenn der Hebel (4) relativ zu dem Gehäuse (2) geschwenkt wird.

7. Abisolierwerkzeug (1) nach Anspruch 6, wobei jeder der zwei Arme (42) in einer Gabel (421) endet.

8. Abisolierwerkzeug (1) nach Anspruch 7, wobei das vorstehende Ende der zwei Führungsstifte (32) aus dem Gehäuse (2) nach außen vorsteht und in die Gabel (421) eingreift, um eine Bewegung des Klingenblocks (3) entlang des Schneidepfads zu veranlassen.

9. Abisolierwerkzeug (1) nach einem der vorstehenden Ansprüche, wobei das Gehäuse (2) die Form eines Parallelepipeds mit einem teilweise geöffneten Boden aufweist.

10. Abisolierwerkzeug (1) nach Anspruch 9, wobei die Klinge (31) eine Schneidekante (31 a) aufweist, die dem geöffneten Boden zugewandt ist.

11. Abisolierwerkzeug (1) nach einem der vorstehenden Ansprüche, das weiterhin eine Basis (5) umfasst, die eine Kabelhaltefläche (50) zum Halten des optischen Kabels (7) aufweist.

12. Abisolierwerkzeug (1) nach Anspruch 11, wobei die Basis (5) mit dem Gehäuse (2) verbunden ist, um das optische Kabel (7) zwischen der Kabelhaltefläche (50) und wenigstens einer durch das Gehäuse (2) gebildeten Kabelstoppfläche (22a) zu blockieren.

13. Abisolierwerkzeug (1) nach Anspruch 12, wobei die Basis (5) eine Einstellungseinrichtung (54, 6) zum Einstellen einer reziproken Distanz zwischen der Basis (5) und dem Gehäuse (2) umfasst, damit das Abisolierwerkzeug (1) mit optischen Kabeln verschiedener Durchmesser verwendet werden kann.

14. Abisolierwerkzeug (1) nach Anspruch 13, wobei die Einstellungseinrichtung (54, 6) wenigstens einen Zylinder (54) und wenigstens eine Mutter (6) umfasst, wobei der Zylinder (54) von der Basis (5) vorsteht, sich durch das Gehäuse (2) erstreckt und ein von dem Gehäuse (2) vorstehendes Gewindeende aufweist, und wobei die Mutter (6) einen Rohrkörper (61) mit einem Innengewinde zum Aufnehmen des Gewindeendes des Zylinders (54) aufweist.

## Revendications

1. Outil de dénudage (1) pour découper une fenêtre d'accès (70) dans un câble optique (7), l'outil (1) comprenant :
- un bloc lame (3) comprenant une lame (31) ;
- un carter (2) doté d'au moins un élément de guidage (23), dans lequel le bloc lame (3) est mobile à l'intérieur du carter (2) ; et
- un dispositif d'actionnement (4), utilisable depuis l'extérieur du carter (2), configuré pour communiquer au bloc lame (3) un mouvement le long d'une trajectoire de coupe définie par l'élément de guidage (23) de sorte qu'une partie de la gaine du câble optique (7) soit découpée de manière contrôlée, ledit dispositif d'actionnement comprenant un levier (4) fixé de manière pivotante audit carter (2).

2. Outil de dénudage (1) selon la revendication 1, dans lequel l'élément de guidage (23) comprend une fente de guidage (23) prévue dans une paroi latérale (21) du carter (2).

3. Outil de dénudage (1) selon la revendication 2, dans lequel la fente de guidage (23) a une partie centrale (23a) et deux parties d'extrémité (23b), la partie centrale (23a) étant sensiblement rectiligne et les deux parties d'extrémité (23b) étant inclinées par rapport à la partie rectiligne centrale (23a), de sorte que la fente de guidage (23) soit courbée.

4. Outil de dénudage (1) selon l'une quelconque des revendications précédentes, dans lequel le carter (2) comprend en outre une fente d'expulsion (24) prévue dans une fermeture d'extrémité (22) du carter (2) pour permettre l'expulsion de la partie de la gaine du carter (2).

5. Outil de dénudage (1) selon l'une quelconque des revendications précédentes, dans lequel le bloc lame (3) comprend en outre au moins deux axes de guidage (32) ayant au moins une extrémité saillante adaptée pour se mettre en prise avec l'élément de guidage (23) pour guider le bloc lame (3) dans le carter (2) le long de la trajectoire de coupe.

6. Outil de dénudage (1) selon la revendication 1, dans lequel le levier (4) comprend deux bras (42) montés sur le carter (2), les deux bras (42) étant mobiles le long de l'élément de guidage (23) lorsque le levier (4) est tourné par rapport au carter (2).

7. Outil de dénudage (1) selon la revendication 6, dans lequel chacun des deux bras (42) se termine par une fourche (421).

8. Outil de dénudage (1) selon la revendication 7, dans lequel l'extrémité saillante des deux axes de guidage (32) fait saillie vers l'extérieur du carter (2) et se met en prise avec la fourche (421) pour communiquer au bloc lame (3) un mouvement le long de la trajectoire de coupe.

9. Outil de dénudage (1) selon l'une quelconque des revendications précédentes, dans lequel le carter (2) se présente sous la forme d'un parallélépipède avec un fond partiellement ouvert.

10. Outil de dénudage (1) selon la revendication 9, dans lequel la lame (31) a un bord coupant (31a) orienté vers le fond ouvert.

11. Outil de dénudage (1) selon l'une quelconque des revendications précédentes, comprenant en outre une base (5) ayant une surface de support de câble (50) pour supporter le câble optique (7).

12. Outil de dénudage (1) selon la revendication 11, dans lequel la base (5) est reliée au carter (2) pour bloquer le câble optique (7) entre la surface de support de câble (50) et au moins une surface d'arrêt de câble (22a) formée par le carter (2).

13. Outil de dénudage (1) selon la revendication 12, dans lequel la base (5) comprend des moyens d'ajustement (54, 6) pour ajuster une distance réciproque entre la base (5) et le carter (2), pour utiliser l'outil de dénudage (1) avec des câbles optiques de diamètres différents.

14. Outil de dénudage (1) selon la revendication 13, dans lequel les moyens d'ajustement (54, 6) comprennent au moins un cylindre (54) et au moins un écrou (6), le cylindre (54) faisant saillie à partir de la base (5), passant à travers le carter (2) et ayant une extrémité filetée faisant saillie à partir du carter (2), l'écrou (6) ayant un corps tubulaire fileté à l'intérieur (61) adapté pour recevoir l'extrémité filetée du cylindre (54).
